# FASCICULE DE BREVET EUROPEEN

(11) **EP 4 299 903 B1**
(45) Date de publication et mention de la délivrance du brevet: **09.10.2024**
(21) Numéro de dépôt: 23175221.3
(22) Date de dépôt: 25.05.2023
(51) Int. Cl.: F04B 15/02, B01D 19/00, F04B 23/02, F04B 23/08, F04F 3/00, F04F 5/04, F04F 5/52, F04F 5/54

(54) **DISPOSITIF ET PROCÉDÉ D'ASPIRATION ET DE MISE EN PRESSION À L'AIDE D'UN HYDRO-ÉJECTEUR**
VORRICHTUNG UND VERFAHREN ZUM ANSAUGEN UND DRUCKSETZEN MIT EINEM HYDROEJEKTOR
DEVICE AND METHOD FOR SUCKING AND PRESSURIZING USING A HYDRO-EJECTOR

(30) Priorité: 28.06.2022 FR 2206465
(43) Date de publication de la demande: 03.01.2024
(73) Titulaire: ORTEC EXPANSION, 13799 Aix-en-Provence - Cedex 3 (FR)
(72) Inventeur: RIVARD, Daniel, 75007 PARIS (FR)
(74) Mandataire: Gevers & Orès

(56) Documents cités:
- EP-A1- 1 548 195
- EP-A1- 4 006 340
- DE-A1- 2 511 334
- FR-A1- 2 806 938
- JP-A- 2009 066 587

## Description

### Domaine technique

La présente invention concerne un dispositif et un procédé d'aspiration et de mise en pression à l'aide d'un hydro-éjecteur, ainsi qu'un hydrocureur pourvu d'un tel dispositif.

### Etat de la technique

De nombreuses industries génèrent des déchets sous forme de liquides ou de boues. Pour certaines, par exemple dans les secteurs de la chimie, de la pétrochimie, de l'agroalimentaire ou encore de la métallurgie, ces déchets peuvent être dangereux, toxiques et polluants. Il est donc nécessaire d'évacuer ces déchets vers des sites spécialisés de traitement et/ou de stockage. Pour cela, des opérations d'assainissement, en particulier par pompage, peuvent être mises en oeuvre. De telles opérations peuvent notamment consister à purger des égouts municipaux ou industriels, récupérer des déchets produits par un nettoyage à eau sous haute pression d'installations industrielles, extraire des boues de stations d'épuration, assécher des fonds de cuves de manière à permettre leur inspection ou leur maintenance, ...

Afin de réaliser ces opérations, il est connu d'utiliser des hydrocureurs, à savoir des engins munis d'équipements de nettoyage industriel. Un hydrocureur comporte usuellement deux équipements techniques différents :
- une pompe haute pression destinée à réaliser des missions de décapage et de curage ; et
- une pompe à vide destinée à faire le vide dans une cuve de réception apte à recevoir, par aspiration, des déchets produits par le nettoyage ou le curage.

Ce dernier équipement permet d'assurer des fonctions variées, par exemple l'aspiration ou le refoulement de produits à évacuer. L'aspiration est réalisée par génération d'une dépression (ou d'un vide) dans la cuve de réception et le refoulement par génération d'une mise sous pression de ladite cuve.

En général, l'aspiration (ou mise sous vide de la cuve de réception) est réalisée par une pompe à vide et la mise en pression est réalisée par une pompe ou un compresseur. Ces équipements nécessitent un certain nombre d'accessoires pour fonctionner, par exemple des systèmes de refroidissement ou des systèmes d'entraînement. Cette multitude d'équipements représente donc un encombrement, un coût de fabrication et de maintenance et un poids non négligeables, en plus de complexifier la conception d'un hydrocureur en vue de leur agencement.

Un dispositif d'aspiration et de mise en pression est par exemple connu du document EP 4 006 340 A1.

Par conséquent, il peut être avantageux de trouver des solutions pour assurer les fonctions d'aspiration et de mise en pression usuelles avec un nombre d'équipements réduit.

### Exposé de l'invention

La présente invention a pour objet d'apporter une solution technique et économique à cette problématique multiple. Elle concerne un dispositif d'aspiration et de mise en pression comportant :
- une cuve à eau ;
- une pompe haute pression reliée à la cuve à eau et apte à fournir de l'eau à haute pression, par exemple pour le nettoyage industriel, le curage et/ou le pompage ;
- un hydro-éjecteur alimenté en eau à haute pression par la pompe haute pression au niveau d'une entrée d'eau et configuré pour générer, à partir de la vitesse de l'eau sous haute pression, une aspiration en amont d'une entrée d'air, l'eau à haute pression et l'air aspiré se mélangeant pour former un flux d'eau et d'air qui est refoulé au niveau d'une conduite d'échappement ;
- un pot de séparation relié à la conduite d'échappement de l'hydro-éjecteur et configuré pour séparer l'eau et l'air du flux d'eau et d'air, l'eau étant refoulée au niveau d'une sortie d'eau et retournant à la cuve à eau d'une part et l'air étant refoulé au niveau d'une sortie d'air d'autre part.

Selon l'invention, ledit pot de séparation comporte, au niveau de la sortie d'eau, un flotteur et un étranglement configuré pour permettre à l'hydro-éjecteur de générer une pression dans le pot de séparation apte à réaliser une mise en pression en aval de la sortie d'air, l'hydro-éjecteur étant ainsi apte à réaliser :
- une aspiration (usuelle) en amont de l'entrée d'air ; et
- une mise en pression en aval de la sortie d'air.

Ainsi, grâce à l'invention, on dispose d'un dispositif permettant de réaliser une aspiration et une mise en pression, par exemple d'une cuve (notamment de stockage), et ceci en utilisant un nombre d'équipements restreint, à savoir un seul hydro-éjecteur alimenté par une pompe haute pression. Par conséquent, on dispose d'un dispositif de réalisation simple, peu encombrant, léger et peu onéreux, permettant de réaliser aussi bien des opérations d'aspiration que des opérations de mise en pression. Ces opérations peuvent notamment servir à réaliser un pompage de produits (aspiration) et/ou une évacuation de produits, par exemple par refoulement (mise en pression).

Dans un mode de réalisation préféré, ledit dispositif comporte une vanne quatre voies à inversion de flux configurée pour relier l'hydro-éjecteur et le pot de séparation selon l'une ou l'autre des configurations suivantes :
- une première configuration selon laquelle l'entrée d'air de l'hydro-éjecteur est reliée à une canalisation de prise d'air et la sortie d'air du pot de séparation est reliée à l'air libre ; et
- une seconde configuration selon laquelle l'entrée d'air de l'hydro-éjecteur est reliée à l'air libre et la sortie d'air du pot de séparation est reliée à une canalisation de mise en pression.

Avantageusement, le pot de séparation comporte un flotteur au niveau de la sortie d'eau, le flotteur et la sortie d'eau comportant l'étranglement étant configurés pour permettre de conserver une hauteur d'eau dans le pot de séparation qui reste supérieure à un niveau minimum, ledit niveau minimum correspondant à une hauteur d'eau à partir de laquelle de l'air est emporté avec l'eau au niveau de la sortie d'eau.

En outre, le flotteur et la sortie d'eau comportant l'étranglement sont configurés pour conserver une hauteur d'eau dans le pot de séparation qui reste inférieure à un niveau maximum, ledit niveau maximum correspondant à une hauteur d'eau à partir de laquelle de l'eau est emportée avec l'air au niveau de la sortie d'air.

Ainsi, grâce à l'étranglement au niveau de la sortie d'eau, le flotteur (agencé au-dessus de l'étranglement) est soulevé à une hauteur permettant de créer une pression dans le pot de séparation, de préférence une pression d'environ 500 grammes, sans pour autant que l'air refoulé ne puisse embarquer des particules d'eau avec lui.

Par ailleurs, avantageusement, le pot de séparation présente une forme d'hydrocyclone.

Dans un mode de réalisation particulier, le pot de séparation comporte au moins un déflecteur configuré pour diriger le flux entrant dans le pot de séparation vers un fond dudit pot de séparation comportant la sortie d'eau et l'étranglement.

La présente invention concerne également un hydrocureur comportant au moins un dispositif d'aspiration et de mise en pression tel que celui décrit ci-dessus.

Dans un mode de réalisation particulier, l'hydrocureur comporte également au moins une cuve de stockage. De plus :
- l'entrée d'air de l'hydro éjecteur est apte à être reliée à un orifice d'aspiration de la cuve de stockage, l'hydro-éjecteur étant apte à générer une aspiration dans la cuve de stockage à partir de l'aspiration générée en amont de l'entrée d'air ; et
- la sortie d'air du pot de séparation est apte à être reliée à un orifice de mise en pression de la cuve de stockage, l'hydro-éjecteur étant apte à générer une mise en pression dans la cuve de stockage à partir de la mise en pression générée en aval de la sortie d'air du pot de séparation.

De préférence, le dispositif d'aspiration et de mise en pression comporte une vanne quatre voies à inversion de flux configurée pour relier l'hydro-éjecteur et le pot de séparation selon l'une ou l'autre des configurations suivantes :
- une première configuration permettant à l'hydro-éjecteur de générer une aspiration dans la cuve de stockage, selon laquelle l'entrée d'air de l'hydro-éjecteur est reliée audit orifice de la cuve de stockage et la sortie d'air du pot de séparation est reliée à l'air libre ; et
- une seconde configuration permettant à l'hydro-éjecteur de générer une mise en pression dans la cuve de stockage, selon laquelle l'entrée d'air de l'hydro-éjecteur est reliée à l'air libre et la sortie d'air du pot de séparation est reliée audit orifice de la cuve de stockage.

La présente invention concerne également un procédé d'aspiration et de mise en pression à l'aide d'un dispositif d'aspiration et de mise en pression tel que celui décrit ci-dessus.

Selon l'invention, ledit procédé comprend les deux phases suivantes :
- une première phase dite d'aspiration dans laquelle l'hydro-éjecteur du dispositif d'aspiration et de mise en pression génère une aspiration en amont de l'entrée d'air ; et
- une seconde phase dite de mise en pression dans laquelle l'hydro-éjecteur du dispositif d'aspiration et de mise en pression génère une mise en pression en aval de la sortie d'air.

### Brève description des figures

Les figures annexées feront bien comprendre comment l'invention peut être réalisée. Sur ces figures, des références identiques désignent des éléments semblables.
La figure 1 est une vue schématique d'un mode de réalisation particulier d'un dispositif d'aspiration et de mise en pression lors d'une phase d'aspiration.
La figure 2 est une vue similaire à celle de la figure 1 lors d'une phase de mise en pression.
La figure 3 est une vue en coupe d'un mode de réalisation particulier d'un pot de séparation d'un dispositif d'aspiration et de mise en pression.
La figure 4 est une vue en perspective du pot de séparation de la figure 3.
La figure 5 est une vue en perspective d'un hydrocureur comportant un dispositif d'aspiration et de mise en pression.

### Description détaillée

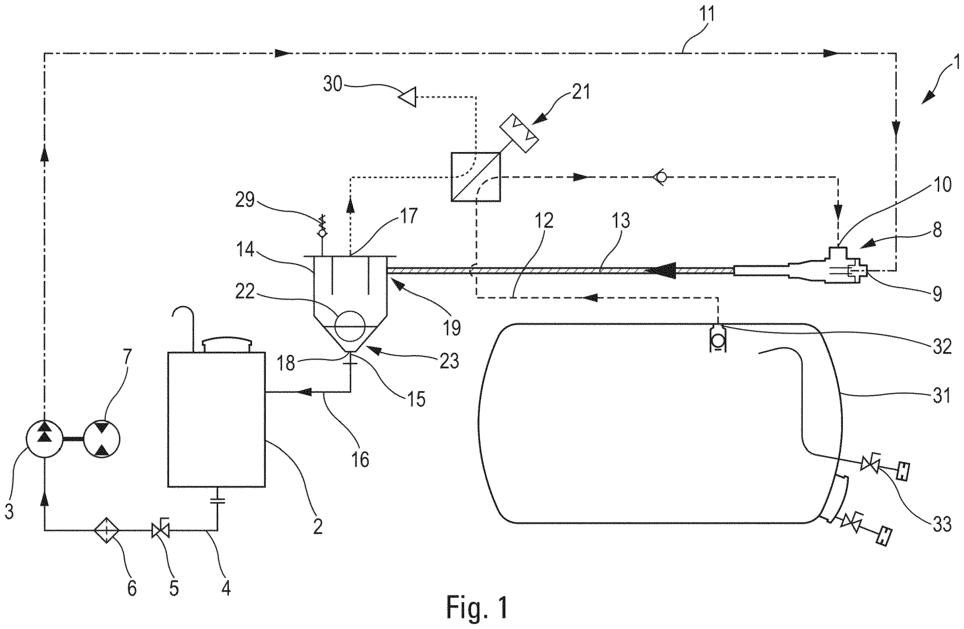

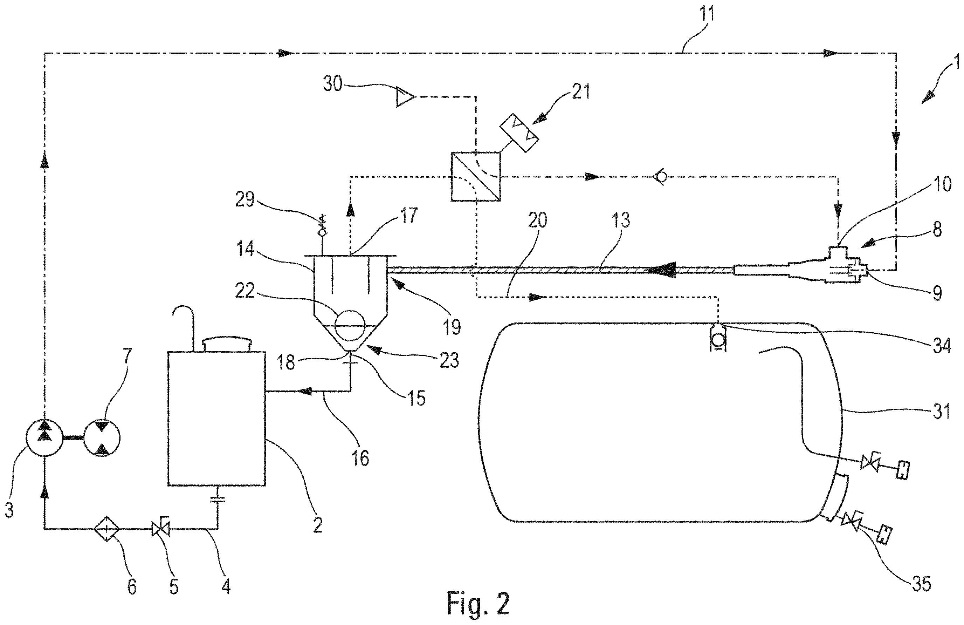

Le dispositif d'aspiration et de mise en pression (ci-après « dispositif 1 ») permettant d'illustrer l'invention est représenté schématiquement dans un mode de réalisation préféré sur la figure 1 et la figure 2.

D'une part, le dispositif 1 est configuré pour pouvoir générer une aspiration, par exemple pour réaliser le pompage de produits tels que des boues, des solvants, des nappes de pétrole, .... Ces produits peuvent notamment être pompés depuis une zone de pompage vers une enceinte de stockage.

D'autre part, le dispositif 1 est également configuré pour pouvoir générer une mise en pression, par exemple pour réaliser l'évacuation par refoulement de produits préalablement pompés depuis l'enceinte de stockage vers une zone d'évacuation.

Dans le cadre de la présente invention, on entend :
- par « zone de pompage», un endroit, par exemple un emplacement particulier notamment sur un site industriel ou bien une citerne ou un autre contenant, où se trouvent les produits qui doivent être pompés, par exemple pour être déplacés vers un site de traitement spécialisé ;
- par « enceinte de stockage», un contenant tel qu'une cuve, un bac, une citerne, destiné à recevoir les produits pompés. Ce contenant peut par exemple être monté sur un véhicule pour transporter les produits stockés vers un site de traitement. Un tel véhicule peut correspondre à un hydrocureur, comme précisé ci-après dans une application particulière ; et
- par « zone d'évacuation », un endroit, par exemple un site de traitement spécialisé, comportant des contenants tels que des cuves, des bacs ou des citernes, destinés à la récupération et/ou au traitement des produits à évacuer.

De plus, dans le cadre de la présente description :
- sur la figure 1 et la figure 2, des traits de types différents (tirets, pointillés, traits mixtes, ...) représentent des circuits (d'eau et/ou d'air) différents et des flèches sur ces traits représentent le sens de circulation de l'eau et/ou de l'air dans ces circuits ;
- le terme « amont » caractérise un élément d'un circuit (d'eau et/ou d'air) se situant avant un point donné, dans le sens de circulation dans ledit circuit ; et
- le terme « aval » caractérise un élément d'un circuit (d'eau et/ou d'air) se situant après un point donné, dans le sens de circulation dans ledit circuit.

Le dispositif 1, représenté schématiquement sur la figure 1 et la figure 2, comporte une cuve à eau 2 permettant de stocker de l'eau destiné à alimenter le dispositif 1 en eau. Il comporte également une pompe haute pression 3 reliée à la cuve à eau 2 par une canalisation 4. La canalisation 4 comprend notamment une vanne 5 d'isolement permettant d'ouvrir ou de fermer la circulation d'eau entre la cuve à eau 2 et la pompe haute pression 3. La canalisation 4 comprend également, en amont de la pompe haute pression 3 sur la canalisation 4, un filtre à eau 6 permettant de filtrer l'eau arrivant dans la pompe haute pression 3.

La pompe haute pression 3 est entraînée par un moteur hydraulique 7. Elle est configurée pour mettre en pression l'eau provenant de la cuve à eau 2 afin de fournir de l'eau à haute pression à un hydro-éjecteur 8.

Le dispositif 1 comporte également l'hydro-éjecteur 8 qui comprend, de façon usuelle, une entrée d'eau 9 et une entrée d'air 10. L'hydro-éjecteur 8 est alimenté en eau à haute pression via une canalisation 11 reliant la pompe haute pression 3 à l'entrée d'eau 9. L'hydro-éjecteur 8 est configuré pour générer, à partir de cette eau à haute pression, une aspiration en amont de l'entrée d'air 10. L'hydro-éjecteur 8 présente une configuration usuelle (qui n'est pas décrite plus en détail) utilisant l'effet venturi afin de réaliser un appel d'air, et donc une aspiration.

L'aspiration générée par l'hydro-éjecteur 8 est déterminée notamment par la vitesse de l'eau à haute pression entrant dans ledit hydro-éjecteur 8. Or, la vitesse d'eau créant l'aspiration (donc une dépression ou un vide) est proportionnelle à un diamètre et une longueur d'une conduite d'échappement 13. Ces paramètres peuvent donc être ajustés afin de calibrer une aspiration souhaitée. Ces paramètres peuvent, en particulier, permettre d'optimiser un rapport entre l'aspiration (ou le vide) et le débit d'air aspiré en entrée d'air 10.

L'entrée d'air 10 peut notamment être reliée, via une canalisation 12 de prise d'air, à un endroit où l'on veut générer une aspiration et donc une dépression (ou un vide). Par exemple, le dispositif 1 peut être utilisé pour réaliser des opérations de pompage en générant une dépression dans une enceinte de stockage, la dépression générée permettant d'aspirer des produits à pomper dans ladite enceinte de stockage.

Dans un mode de réalisation particulier représenté sur la figure 1, l'enceinte de stockage correspond à une cuve de stockage 31 munie d'un orifice 32 d'aspiration et d'une vanne 33 d'aspiration. La canalisation 12 est reliée à l'orifice 32 et l'hydro-éjecteur 8 est ainsi apte à générer une aspiration, à savoir une dépression ou un vide, dans la cuve de stockage 31. Ce vide généré dans la cuve de stockage 31 est apte à aspirer des produits à pomper par la vanne 33 qui est destinée à être reliée par l'intermédiaire d'une conduite (non représentée) à une zone de pompage comportant lesdits produits à pomper. Dans ce mode de réalisation particulier, le dispositif 1 est donc apte à pomper des produits depuis une zone de pompage (non représentée) vers la cuve de stockage 31.

En outre, le dispositif 1 comporte également la conduite d'échappement 13 dans laquelle l'eau à haute pression et l'air aspiré sont mélangés et forment un flux d'eau et d'air. Le flux d'eau et d'air ainsi formé est refoulé en aval de la conduite d'échappement 13 vers une entrée 19 d'un pot de séparation 14.

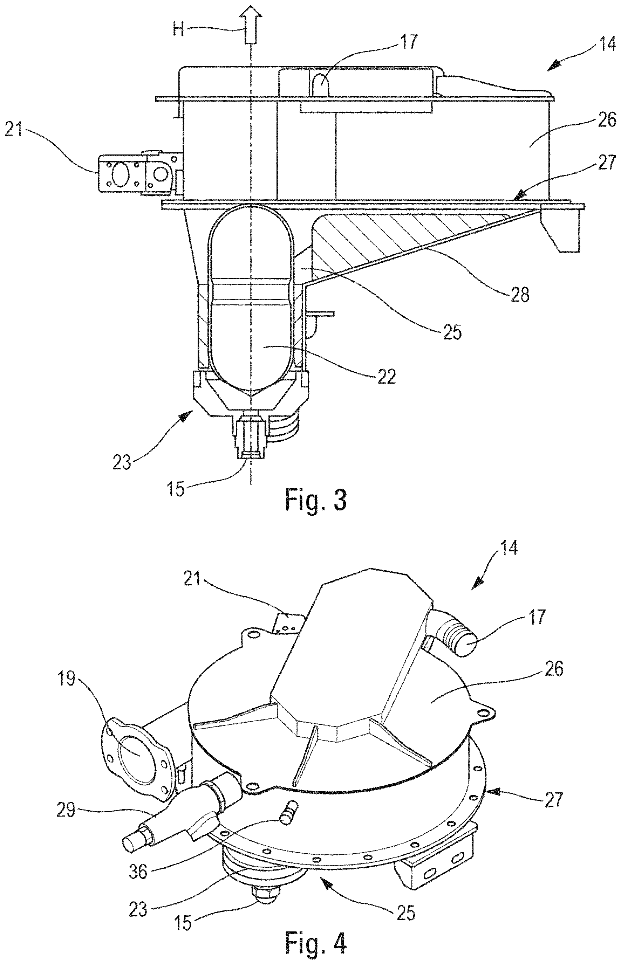

Le pot de séparation 14 est configuré pour permettre une séparation de l'eau et de l'air du flux (d'eau et d'air) provenant de l'hydro-éjecteur 8 via la conduite d'échappement 13. Les particules d'air mélangées à l'eau présentant une densité plus faible que celle de l'eau, l'air se sépare donc naturellement de l'eau lorsque le flux d'eau et d'air se stabilise dans le pot de séparation 14. Plus particulièrement, l'eau ruissèle vers une partie basse du pot de séparation 14 tandis que l'air remonte en suspension vers une partie haute dudit pot de séparation 14. La partie haute du pot de séparation 14 correspond à la partie située dans le sens illustré par une flèche H sur la figure 3. Inversement, la partie basse du pot de séparation 14 correspond à la partie située dans le sens opposé au sens illustré par la flèche H.

Le pot de séparation 14 comprend une sortie d'eau 15 par laquelle l'eau ainsi séparée de l'air est refoulée vers la cuve à eau 2 via une canalisation 16. De préférence, la sortie d'eau 15 est située au plus bas de la partie basse du pot de séparation 14. Par ailleurs, le pot de séparation 14 comprend une sortie d'air 17 par laquelle l'air séparé de l'eau est refoulé. De préférence, la sortie d'air 17 est située dans la partie haute du pot de séparation 14.

En outre, le pot de séparation 14 comporte, au niveau de la sortie d'eau 15, un étranglement 18. Cet étranglement 18 est configuré pour permettre à l'hydro-éjecteur 8 de générer une pression dans le pot de séparation 14. Cette pression est apte à réaliser une mise en pression en aval de la sortie d'air 17 par rapport au pot de séparation 14.

Cette sortie d'air 17 peut notamment être reliée, via une canalisation 20 de mise en pression, à un endroit où l'on souhaite réaliser une mise en pression. Par exemple, la canalisation 20 peut être reliée à une enceinte de stockage contenant des produits à évacuer. Grâce à la mise en pression en aval de la sortie d'air 17, on est ainsi en mesure de refouler ces produits à évacuer hors de l'enceinte de stockage vers une zone d'évacuation.

Dans un mode de réalisation particulier représenté sur la figure 2, l'enceinte de stockage correspond à la cuve de stockage 31 munie d'un orifice 34 de mise en pression et d'une vanne 35 de mise en pression. La canalisation 20 est reliée à l'orifice 34 et l'hydro-éjecteur 8 est ainsi apte à générer une mise en pression dans la cuve de stockage 31. Cette mise en pression est apte à refouler des produits à évacuer contenus dans ladite cuve de stockage 31 par la vanne 35 qui est destinée à être reliée à une zone d'évacuation par l'intermédiaire d'une conduite non représentée. Dans ce mode de réalisation, le dispositif 1 est donc apte à refouler des produits depuis la cuve de stockage 31 vers une zone d'évacuation (non représentée).

Par ailleurs, dans une réalisation préférée, l'orifice 32 correspond à l'orifice 34 de sorte que la cuve de stockage 31 comporte un seul et même orifice auquel est reliée, soit l'entrée d'air de l'hydro-éjecteur 8, soit la sortie d'air 17 du pot de séparation 14, comme précisé dans une application préférée ci-après.

Ainsi, le dispositif 1 permet de réaliser une aspiration et une mise en pression, et ceci en utilisant un nombre restreint d'équipements, à savoir notamment un seul hydro-éjecteur 8 alimenté par une pompe haute pression 3. Par conséquent, on dispose d'un dispositif 1, de réalisation simple, peu encombrant, léger et peu onéreux, permettant de réaliser aussi bien des opérations d'aspiration que des opérations de mise en pression. Ces opérations peuvent notamment servir à réaliser un pompage de produits (aspiration) et/ou une évacuation de produits, par exemple par refoulement (mise en pression).

Dans un mode de réalisation préféré, le dispositif 1 comporte une vanne 21 apte à relier l'hydro-éjecteur 8 et le pot de séparation 14 selon l'une ou l'autre des deux configurations ci-dessous. De préférence, la vanne 21 correspond à une vanne quatre voies à inversion de flux.

Dans une première configuration, représentée sur la figure 1, la vanne 21 est configurée pour relier, d'une l'entrée d'air 10 de l'hydro-éjecteur 8 à la canalisation 12, et d'autre part la sortie d'air 17 du pot de séparation 14 à une prise d'air libre 30 (représentée schématiquement par un triangle sur la figure 1). Cette configuration peut notamment correspondre à une mise en oeuvre d'une opération d'aspiration (pompage) via la canalisation 12, telle que décrite ci-dessous.

Dans une seconde configuration, représentée sur la figure 2, la vanne 21 est configurée pour relier, d'une part l'entrée d'air 10 de l'hydro-éjecteur 8 à la prise d'air libre 30 (représentée schématiquement par un triangle sur la figure 2), et d'autre part la sortie d'air 17 du pot de séparation 14 à la canalisation 20. Cette configuration peut notamment correspondre à une mise en oeuvre d'une opération de mise en pression (ou refoulement) via la canalisation 20, telle que décrite ci-dessous.

Dans un mode de réalisation particulier, représenté sur la figure 3 et la figure 4, le pot de séparation 14 comporte un flotteur 22 au niveau de la sortie d'eau 15 comportant l'étranglement 18. Le pot de séparation 14 comprend un fond 23 pourvu de la sortie d'eau 15. Le fond 23 est situé au niveau de la partie basse du pot de séparation 14 et il présente une forme adaptée pour y agencer le flotteur 22.

Le flotteur 22 et la sortie d'eau 15 comportant l'étranglement 18 sont configurés pour permettre de conserver une hauteur d'eau dans le pot de séparation 14 qui reste supérieure à un niveau minimum. Le niveau minimum correspond à une hauteur d'eau à partir de laquelle de l'air est emporté avec l'eau au niveau de la sortie d'eau 15. Ainsi, le niveau minimum représente une hauteur d'eau limite en dessous de laquelle la hauteur d'eau dans le pot de séparation 14 ne doit pas descendre afin d'obtenir une étanchéité d'eau dans ledit pot de séparation 14. On entend par « étanchéité d'eau » le fait qu'il reste toujours une hauteur d'eau dans le pot de séparation 14 telle que la sortie d'eau 15 est totalement et suffisamment immergée pour éviter que l'air dans le pot de séparation 14 soit emporté avec l'eau par la sortie d'eau 15.

La sortie d'eau 15 comporte un orifice (non représenté) calibré de manière à obtenir un niveau d'eau approprié à la sortie d'eau 15 et ainsi créer une perte de charge.

En outre, le flotteur 22 et la sortie d'eau 15 comportant l'étranglement 18 sont également configurés pour permettre de conserver une hauteur d'eau dans le pot de séparation 14 qui reste inférieure à un niveau maximum. Le niveau maximum correspond une hauteur d'eau dans le pot de séparation 14 à partir de laquelle de l'eau est emportée avec l'air au niveau de la sortie d'air 17.

Ainsi, grâce à l'étranglement 18 au niveau de la sortie d'eau 15, le flotteur 22 est soulevé à une hauteur permettant de créer une pression dans le pot de séparation 14, sans pour autant que l'air refoulé par la sortie d'air 17 ne puisse embarquer des particules d'eau avec lui. De préférence, la pression créée dans le pot de séparation 14 correspond à une pression de 500 grammes.

Par conséquent, le flotteur 22 et la sortie d'eau 15 comportant l'étranglement 18 sont configurés, de préférence, pour permettre de conserver une hauteur d'eau dans le pot de séparation 14 qui reste supérieure à un niveau minimum prédéterminé et inférieure à un niveau maximum prédéterminé.

Dans un mode de réalisation préféré, le pot de séparation 14 correspond à un hydrocyclone configuré pour séparer l'eau et l'air compris dans le flux entrant dans le pot de séparation 14. L'hydrocyclone présente au moins une partie en forme de cône apte à favoriser la séparation l'eau de l'air et à diriger l'eau vers la partie basse du pot de séparation.

Le pot de séparation 14 comporte notamment une base 25 comprenant le fond 23, et un chapeau 26 comprenant la sortie d'air 17. La base 25 et le chapeau 26 présentent tous les deux une forme généralement cylindrique de sorte que le chapeau 26 est apte à être monté sur la base 25. En outre, la base 25 présente une paroi conique 28 formant la partie en forme cône de l'hydrocyclone.

De plus, la base 25 et le chapeau 26 sont soudés ensemble par une soudure continue étanche au niveau d'une interface 27. La soudure entre la base 25 et le chapeau 26 présente notamment une étanchéité à eau. De préférence, la soudure est apte à être étanche jusqu'à une pression d'eau dans le pot de séparation 14 d'au moins 0,7 bar.

Le pot de séparation 14 peut comporter des équipements variés. Par exemple, comme représenté sur la figure 1, la figure 2 et la figure 4, le pot de séparation 14 peut comporter une soupape 29 réglable. De préférence, la soupape 29 est réglée à 0,5 bar. Le pot de séparation 14 peut également comporter une prise de pression 36 (figure 4) permettant de monter des instruments de mesure, par exemple un manomètre.

Dans un mode de réalisation particulier, le pot de séparation 14 comporte au moins un déflecteur (non représenté) au niveau de l'arrivée du flux d'eau et d'air provenant de de l'hydro-éjecteur 8. Le déflecteur est agencé en regard de l'entrée 19 du pot de séparation 14. Le déflecteur est configuré pour diriger ledit flux provenant de l'hydro-éjecteur 8, vers le fond 23 du pot de séparation 14 comportant la sortie d'eau 15. Le déflecteur permet ainsi à l'eau arrivant dans le pot de séparation 14 d'être stabilisée plus rapidement dans le fond 23. Cela permet d'éviter d'avoir des turbulences dans le pot de séparation 14 qui favorisent la mise en suspension de gouttelettes d'eau qui pourraient être emportées avec l'air au niveau de la sortie d'air 17.

Le dispositif 1 (d'aspiration et de refoulement), tel que décrit ci-dessus, est apte à mettre en oeuvre un procédé d'aspiration et de mise en pression. Ce procédé peut comporter une phase d'aspiration et une phase de mise en pression. Le dispositif 1 est utilisé pour mettre en oeuvre l'une ou l'autre de ces phases en fonction de l'opération ou du travail envisagé.

La phase d'aspiration consiste à générer une aspiration à l'aide de l'hydro-éjecteur 8 comme illustré sur la figure 1. Pour ce faire, la pompe haute pression 3, entraînée par le moteur hydraulique 7, pompe l'eau de la cuve à eau 2 via la canalisation 4. L'eau pompée est mise en pression par la pompe haute pression 3 et fournie à l'hydro-éjecteur 8 via la canalisation 11. L'eau à haute pression est injectée dans l'hydro-éjecteur 8 par l'entrée d'eau 9. La vitesse de l'eau sous haute pression dans l'hydro-éjecteur 8 réalise, par effet venturi, un appel d'air en amont de l'entrée d'air 10 permettant de créer une dépression, et donc un vide apte à réaliser une aspiration.

L'air ainsi aspiré par l'hydro-éjecteur 8 est mélangé au flux d'eau circulant dans l'hydro-éjecteur 8 et prend la même direction que ledit flux d'eau. De cette manière, un flux d'eau et d'air se forme dans la conduite d'échappement 13 en sortie de l'hydro-éjecteur 8.

Le flux d'eau et d'air est ensuite refoulé via la conduite d'échappement 13 au niveau de l'entrée 19 du pot de séparation 14. Dans le pot de séparation 14, l'eau et l'air se séparent naturellement à cause de la différence de densité. L'eau se stabilise dans la partie basse du pot de séparation 14 au niveau du fond 23, tandis que l'air remonte naturellement en suspension dans la partie haute du pot de séparation 14. L'eau est alors refoulée par la sortie d'eau 15 vers la cuve à eau 2 d'une part, et l'air est refoulé par la sortie d'air 17 d'autre part.

Dans un mode de fonctionnement préféré, le dispositif 1 est configuré pour mettre en oeuvre la phase d'aspiration dans le but de générer une aspiration dans la cuve de stockage 31, comme représenté sur la figure 1. Dans ce cas, la cuve de stockage 31 est notamment destinée à stocker des produits à pomper.

Dans ce mode de fonctionnement préféré, la vanne 21 est commandée afin de relier l'entrée d'air 10 de l'hydro-éjecteur 8 à la canalisation 12 d'une part et la sortie d'air 17 du pot de séparation 14 à la prise d'air libre 30 d'autre part. La canalisation 12 est reliée à l'orifice 32 de la cuve de stockage 31, ce qui permet à l'air contenu dans ladite cuve de stockage 31 d'être aspiré par l'hydro-éjecteur 8. Cela crée une dépression dans la cuve de stockage 31 qui se traduit par une différence entre la pression à l'intérieur de ladite cuve de stockage 31 et la pression atmosphérique de l'environnement extérieur, par exemple une zone de pompage où se situent des produits à pomper. La vanne 33 est ouverte ce qui permet à la pression atmosphérique de pousser les produits à pomper dans la cuve de stockage 31 par ladite vanne 33 via une canalisation non représentée.

L'air de la cuve de stockage 31, aspiré par l'hydro-éjecteur 8, est mélangé à l'eau à haute pression puis refoulé vers le pot de séparation 14 où l'eau et l'air sont séparés. L'air ainsi séparé est évacué à l'air libre par la sortie d'air 17 reliée à la prise d'air libre 30.

Par ailleurs, la phase de mise en pression consiste à générer une mise en pression à l'aide de l'hydro-éjecteur 8, comme illustré sur la figure 2. Pour ce faire, le cheminement de l'alimentation en eau à haute pression de l'hydro-éjecteur 8 est identique à celui de la phase d'aspiration.

Le flux d'eau et d'air est ensuite refoulé dans la conduite d'échappement 13 en sortie de l'hydro-éjecteur 8 pour arriver au niveau de l'entrée 19 du pot de séparation 14. L'eau et l'air sont séparés dans le pot de séparation 14. Sous l'effet de l'étranglement 18 au niveau de la sortie d'eau 15, la pression de l'air contenu dans le pot de séparation 14 augmente. L'air du pot de séparation 14 est alors refoulé par la sortie d'air 17 permettant une mise en pression en aval de ladite sortie d'air 17.

Dans un mode de fonctionnement préféré, le dispositif 1 est configuré pour mettre en oeuvre la phase de mise en pression afin de générer une pression dans la cuve de stockage 31, comme représenté sur la figure 2. Dans ce cas, la cuve de stockage 31 est notamment destinée à contenir des produits à évacuer.

Dans ce mode de fonctionnement, la vanne 21 est commandée afin de relier l'entrée d'air 10 de l'hydro-éjecteur 8 à la prise d'air libre 30 d'une part et la sortie d'air 17 du pot de séparation 14 à la canalisation 20 d'autre part. La canalisation 20 est reliée à l'orifice 32 de la cuve de stockage 31, ce qui permet à l'air sous pression dans le pot de séparation 14 d'être refoulé par la sortie d'air 17 vers la cuve de stockage 31 et de générer une mise en pression dans la cuve de stockage 31. La vanne 35 est ouverte, ce qui permet à la pression dans la cuve de stockage 31 de pousser les produits à l'extérieur de cette dernière, par exemple vers une zone d'évacuation, via une conduite non représentée.

Le dispositif 1 d'aspiration et de mise en pression, tel que décrit ci-dessus, présente de nombreux avantages. En particulier :
- il permet de générer une aspiration et une mise en pression avec un nombre restreint d'équipements ;
- il présente une réalisation simple ;
- il est peu encombrant ;
- il est peu onéreux ; et
- il est léger.

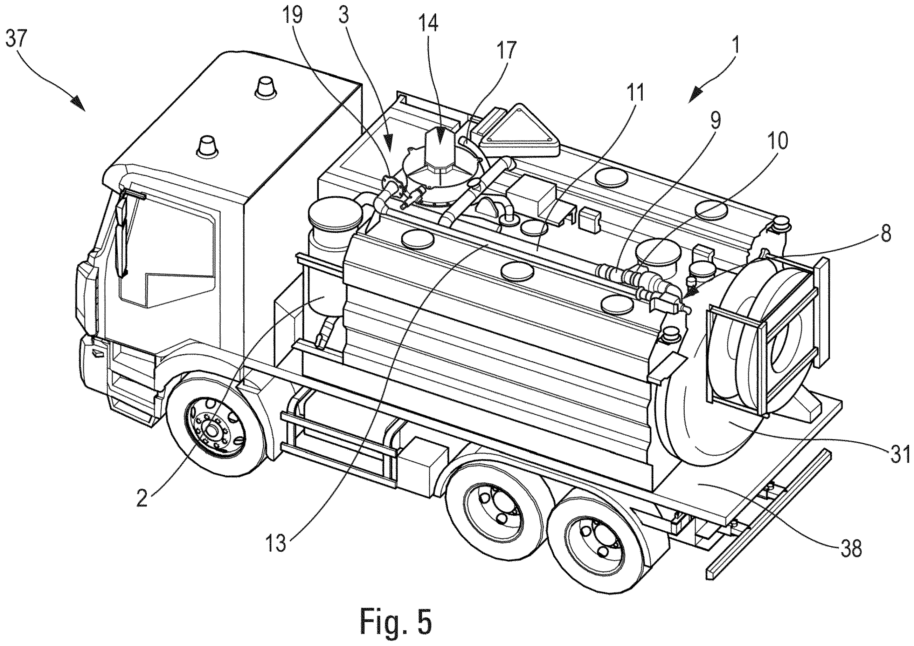

Dans le cadre de la présente invention, le dispositif 1, tel que décrit ci-dessus, peut être utilisé pour des travaux variés. Dans une application préférée, le dispositif 1 est apte à équiper un hydrocureur 37, comme représenté sur la figure 5.

Dans un mode de réalisation particulier, l'hydrocureur 37 comporte la cuve de stockage 31 agencée sur un châssis 38 roulant. De plus, l'hydrocureur 37 est configuré comme détaillé ci-dessous.

D'une part, l'entrée d'air 10 de l'hydro-éjecteur 8 est configurée pour être reliée à l'orifice 32 de la cuve de stockage 31. L'hydro-éjecteur 8 est ainsi apte à générer une aspiration dans la cuve de stockage 31 à partir de l'aspiration générée en amont de l'entrée d'air 10.

D'autre part, la sortie d'air 17 du pot de séparation 14 est configurée pour être reliée à l'orifice 34 de la cuve de stockage 31. L'hydro-éjecteur 8 est ainsi apte à générer une mise en pression dans la cuve de stockage 31 à partir de la mise en pression générée en aval de la sortie d'air 17.

Dans une réalisation particulière du mode de réalisation précédent, l'orifice 32 correspond à l'orifice 34 de sorte que la cuve de stockage 31 comporte un seul et même orifice Cet orifice unique est apte à être relié soit à l'entrée d'air 10 de l'hydro-éjecteur 8 soit à la sortie d'air 17 du pot de séparation 14 comme décrit ci-dessous. En outre, le dispositif 1 comporte une vanne 21 correspondant à une quatre voies à inversion de flux. La vanne 21 est configurée pour relier l'hydro-éjecteur 8 et le pot de séparation 14 selon l'une ou l'autre des configurations suivantes.

Dans une première configuration, l'entrée d'air 10 de l'hydro-éjecteur 8 est reliée à l'orifice de la cuve de stockage 31 via la canalisation 12 et la sortie d'air 17 du pot de séparation 14 est reliée à l'air libre. Dans cette configuration, l'hydrocureur 37 est apte à réaliser des opérations d'aspiration, en particulier des opérations consistant à pomper des produits depuis une zone de pompage en les aspirants dans la cuve de stockage 31.

Dans une seconde configuration, l'entrée d'air 10 de l'hydro-éjecteur 8 est reliée à l'air libre et la sortie d'air 17 du pot de séparation 14 est reliée audit orifice de la cuve de stockage 31 via la canalisation 20. Dans cette configuration, l'hydrocureur 37 est apte à réaliser des opérations de refoulement, en particulier des opérations consistant à évacuer des produits stockés dans la cuve de stockage 31 en mettant en pression l'intérieur de ladite cuve de stockage 31.

Grâce à la vanne 21, on est en mesure de changer de configuration pour réaliser soit une aspiration soit une mise en pression dans la cuve de stockage 31. De préférence, comme décrit ci-dessus, la vanne 21 correspond à une vanne quatre voies à inversion de flux. Toutefois, la vanne 21 peut être remplacée par une ou plusieurs autres vannes de types variés et permettant d'obtenir le même fonctionnement.

## Revendications

1. Dispositif d'aspiration et de mise en pression comportant :
- une cuve à eau (2) ;
- une pompe haute pression (3) reliée à la cuve à eau (2) et apte à fournir de l'eau à haute pression ;
- un hydro-éjecteur (8) alimenté en eau à haute pression par la pompe haute pression (3) au niveau d'une entrée d'eau (9) et configuré pour générer, à partir de la vitesse de l'eau sous haute pression, une aspiration en amont d'une entrée d'air (10), l'eau à haute pression et l'air aspiré se mélangeant pour former un flux d'eau et d'air qui est refoulé au niveau d'une conduite d'échappement (13) ;
- un pot de séparation (14) relié à la conduite d'échappement (13) de l'hydro-éjecteur (8) et configuré pour séparer l'eau et l'air du flux d'eau et d'air, l'eau étant refoulée au niveau d'une sortie d'eau (15) et retournant à la cuve à eau (2) d'une part et l'air étant refoulé au niveau d'une sortie d'air (17) d'autre part,
**caractérisé en ce que** le pot de séparation (14) comporte, au niveau de la sortie d'eau (15), un flotteur (22) et un étranglement (18) configuré pour permettre à l'hydro-éjecteur (8) de générer une pression dans le pot de séparation (14) apte à réaliser une mise en pression en aval de la sortie d'air (17), l'hydro-éjecteur (8) étant ainsi apte à réaliser :
- une aspiration en amont de l'entrée d'air (10) ; et
- une mise en pression en aval de la sortie d'air (17).

2. Dispositif selon la revendication 1,
**caractérisé en ce qu'**il comporte une vanne (21) quatre voies à inversion de flux configurée pour relier l'hydro-éjecteur (8) et le pot de séparation (14) selon l'une ou l'autre des configurations suivantes :
- une première configuration selon laquelle l'entrée d'air (10) de l'hydro-éjecteur (8) est reliée à une canalisation (12) de prise d'air et la sortie d'air (17) du pot de séparation (14) est reliée à l'air libre ; et
- une seconde configuration selon laquelle l'entrée d'air (10) de l'hydro-éjecteur (8) est reliée à l'air libre et la sortie d'air (17) du pot de séparation (14) est reliée à une canalisation (20) de mise en pression.

3. Dispositif selon l'une des revendications 1 et 2,
**caractérisé en ce que** le pot de séparation (14) comporte le flotteur (22) au niveau de la sortie d'eau (15), le flotteur (22) et la sortie d'eau (15) comportant l'étranglement (18) étant configurés pour permettre de conserver une hauteur d'eau dans le pot de séparation (14) qui reste supérieure à un niveau minimum et inférieure à un niveau maximal.

4. Dispositif selon la revendication 3,
**caractérisé en ce que** ledit niveau minimum correspond à une hauteur d'eau à partir de laquelle de l'air est emporté avec l'eau au niveau de la sortie d'eau (15).

5. Dispositif selon l'une quelconque des revendications 3 et 4,
**caractérisé en ce que** ledit niveau maximum correspond à une hauteur d'eau à partir de laquelle de l'eau est emportée avec l'air au niveau de la sortie d'air (17).

6. Dispositif selon l'une quelconque des revendications 1 à 5,
**caractérisé en ce que** le pot de séparation (14) présente une forme d'hydrocyclone.

7. Dispositif selon l'une quelconque des revendications 1 à 6,
**caractérisé en ce que** le pot de séparation (14) comporte au moins un déflecteur configuré pour diriger le flux entrant dans le pot de séparation (14) vers un fond (23) dudit pot de séparation (14) comportant la sortie d'eau (15) et l'étranglement (18).

8. Hydrocureur,
**caractérisé en ce qu'**il comporte au moins un dispositif (1) d'aspiration et de mise en pression selon l'une quelconque des revendications 1 à 7.

9. Hydrocureur selon la revendication 8,
**caractérisé en ce qu'**il comporte au moins une cuve de stockage (31), et **en ce que** :
- l'entrée d'air (10) de l'hydro éjecteur (8) est apte à être reliée à un orifice (32) d'aspiration de la cuve de stockage (31), l'hydro-éjecteur (8) étant apte à générer une aspiration dans la cuve de stockage (31) à partir de l'aspiration générée en amont de l'entrée d'air (10) ; et
- la sortie d'air (17) du pot de séparation (14) est apte à être reliée à un orifice (34) de mise en pression de la cuve de stockage (31), l'hydro-éjecteur (8) étant apte à générer une mise en pression dans la cuve de stockage (31) à partir de la mise en pression générée en aval de la sortie d'air (17) du pot de séparation (14).

10. Hydrocureur selon la revendication 9,
**caractérisé en ce que** le dispositif (1) d'aspiration et de mise en pression comporte une vanne (21) quatre voies à inversion de flux configurée pour relier l'hydro-éjecteur (8) et le pot de séparation (14) selon l'une ou l'autre des configurations suivantes :
- une première configuration permettant à l'hydro-éjecteur (8) de générer une aspiration dans la cuve de stockage (31), selon laquelle l'entrée d'air (10) de l'hydro-éjecteur (8) est reliée audit orifice de la cuve de stockage (31) et la sortie d'air (17) du pot de séparation (14) est reliée à l'air libre ; et
- une seconde configuration permettant à l'hydro-éjecteur (8) de générer une mise en pression dans la cuve de stockage (31), selon laquelle l'entrée d'air (10) de l'hydro-éjecteur (8) est reliée à l'air libre et la sortie d'air (17) du pot de séparation (14) est reliée audit orifice de la cuve de stockage (31).

11. Procédé d'aspiration et de mise en pression à l'aide d'un dispositif (1) d'aspiration et de mise en pression selon l'une quelconque des revendications 1 à 7,
**caractérisé en ce qu'**il comprend les deux phases suivantes :
- une première phase dite d'aspiration dans laquelle l'hydro-éjecteur (8) du dispositif (1) d'aspiration et de mise en pression génère une aspiration en amont de l'entrée d'air (10) ; et
- une seconde phase dite de mise en pression dans laquelle l'hydro-éjecteur (8) du dispositif (1) d'aspiration et de mise en pression génère une mise en pression en aval de la sortie d'air (17).

## Patentansprüche

1. Ansaug- und Druckbeaufschlagungsvorrichtung, umfassend:
- einen Wasserbehälter (2);
- eine Hochdruckpumpe (3), die mit dem Wasserbehälter (2) verbunden ist und geeignet ist, druckbeaufschlagtes Wasser zu liefern;
- einen Hydroejektor (8), der über die Hochdruckpumpe (3) an einem Wassereingang (9) mit druckbeaufschlagtem Wasser versorgt wird und konfiguriert ist, um ausgehend von der Geschwindigkeit des druckbeaufschlagten Wassers eine Ansaugung stromaufwärts eines Lufteingangs (10) zu erzeugen, wobei sich das druckbeaufschlagte Wasser und die angesaugte Luft mischen, um eine Wasser- und Luftströmung zu bilden, die an einer Entlüftungsleitung (13) abgelassen wird;
- einen Trennbecher (14), der mit der Entlüftungsleitung (13) des Hydroejektors (8) verbunden ist und konfiguriert ist, um das Wasser und die Luft der Wasser- und Luftströmung zu trennen, wobei einerseits das Wasser an einem Wasserausgang (15) abgelassen wird und zum Wasserbehälter (2) zurückkehrt und andererseits die Luft an einem Luftausgang (17) abgelassen wird,
**dadurch gekennzeichnet, dass** der Trennbecher (14) am Wasserausgang (15) einen Schwimmer (22) und eine Verengung (18) umfasst, die konfiguriert ist, um dem Hydroejektor (8) zu ermöglichen, im Trennbecher (14) einen Druck zu erzeugen, der geeignet ist, eine Druckbeaufschlagung stromabwärts des Luftausgangs (17) zu bewirken, wobei der Hydroejektor (8) somit zum Bewirken von Folgendem geeignet ist:
- eine Ansaugung stromaufwärts des Lufteingangs (10); und
- eine Druckbeaufschlagung stromabwärts des Luftausgangs (17).

2. Vorrichtung nach Anspruch 1,
**dadurch gekennzeichnet, dass** sie ein Vierwege-Strömungsumkehrventil (21) umfasst, das konfiguriert ist, um den Hydroejektor (8) und den Trennbecher (14) gemäß der einen oder der anderen der folgenden Konfigurationen zu verbinden:
- eine erste Konfiguration, gemäß der der Lufteingang (10) des Hydroejektors (8) mit einer Luftaufnahmerohrleitung (12) verbunden ist und der Luftausgang (17) des Trennbechers (14) mit der Außenluft verbunden ist; und
- eine zweite Konfiguration, gemäß der der Lufteingang (10) des Hydroejektors (8) mit der Außenluft verbunden ist und der Luftausgang (17) des Trennbechers (14) mit einer Druckbeaufschlagungsrohrleitung (20) verbunden ist.

3. Vorrichtung nach einem der Ansprüche 1 und 2,
**dadurch gekennzeichnet, dass** der Trennbecher (14) den Schwimmer (22) am Wasserausgang (15) umfasst, wobei der Schwimmer (22) und der Wasserausgang (15), der die Verengung (18) umfasst, konfiguriert sind, um zu ermöglichen, im Trennbecher (14) einen Wasserpegel aufrechtzuerhalten, der höher als ein Mindestniveau und niedriger als ein Höchstniveau bleibt.

4. Vorrichtung nach Anspruch 3,
**dadurch gekennzeichnet, dass** das Mindestniveau einem Wasserpegel entspricht, vom dem aus Luft mit dem Wasser am Wasserausgang (15) mitgeführt wird.

5. Vorrichtung nach einem der Ansprüche 3 und 4,
**dadurch gekennzeichnet, dass** das Höchstniveau einem Wasserpegel entspricht, vom dem aus Wasser mit der Luft am Luftausgang (17) mitgeführt wird.

6. Verfahren nach einem der Ansprüche 1 bis 5,
**dadurch gekennzeichnet, dass** der Trennbecher (14) eine Form eines Hydrozyklons aufweist.

7. Verfahren nach einem der Ansprüche 1 bis 6,
**dadurch gekennzeichnet, dass** der Trennbecher (14) mindestens einen Deflektor umfasst, der konfiguriert ist, um die in den Trennbecher (14) eintretende Strömung zu einem Boden (23) des Trennbechers (14) zu leiten, der den Wasserausgang (15) und die Verengung (18) umfasst.

8. Saugwagen,
**dadurch gekennzeichnet, dass** er mindestens eine Ansaug- und Druckbeaufschlagungsvorrichtung (1) nach einem der Ansprüche 1 bis 7 umfasst.

9. Saugwagen nach Anspruch 8,
**dadurch gekennzeichnet, dass** er mindestens einen Speicherbehälter (31) umfasst, und dadurch, dass
- der Lufteingang (10) des Hydroejektors (8) geeignet ist, mit einer Saugöffnung (32) des Speicherbehälters (31) verbunden zu werden, wobei der Hydroejektor (8) geeignet ist, ausgehend von der stromaufwärts des Lufteingangs (10) erzeugten Ansaugung eine Ansaugung im Speicherbehälter (31) zu erzeugen; und
- der Luftausgang (17) des Trennbechers (14) geeignet ist, mit einer Druckbeaufschlagungsöffnung (34) des Speicherbehälters (31) verbunden zu werden, wobei der Hydroejektor (8) geeignet ist, ausgehend von der stromabwärts des Luftausgangs (17) des Trennbechers (14) erzeugten Druckbeaufschlagung eine Druckbeaufschlagung im Speicherbehälter (31) zu erzeugen.

10. Saugwagen nach Anspruch 9,
**dadurch gekennzeichnet, dass** die Ansaug- und Druckbeaufschlagungsvorrichtung (1) ein Vierwege-Strömungsumkehrventil (21) umfasst, das konfiguriert ist, um den Hydroejektor (8) und den Trennbecher (14) gemäß der einen oder der anderen der folgenden Konfigurationen zu verbinden:
- eine erste Konfiguration, die dem Hydroejektor (8) ermöglicht, eine Ansaugung im Speicherbehälter (31) zu erzeugen, gemäß der der Lufteingang (10) des Hydroejektors (8) mit der Speicherbehälteröffnung (31) verbunden ist und der Luftausgang (17) des Trennbechers (14) mit der Außenluft verbunden ist; und
- eine zweite Konfiguration, die dem Hydroejektor (8) ermöglicht, eine Druckbeaufschlagung im Speicherbehälter (31) zu erzeugen, gemäß der der Lufteingang (10) des Hydroejektors (8) mit der Außenluft verbunden ist und der Luftausgang (17) des Trennbechers (14) mit der Speicherbehälteröffnung verbunden ist.

11. Verfahren zur Ansaugung und Druckbeaufschlagung mithilfe einer Ansaug- und Druckbeaufschlagungsvorrichtung (1) nach einem der Ansprüche 1 bis 7,
**dadurch gekennzeichnet, dass** es die folgenden zwei Phasen umfasst:
- eine erste, als Ansaugphase bezeichnete Phase, bei der der Hydroejektor (8) der Ansaug- und Druckbeaufschlagungsvorrichtung (1) eine Ansaugung stromaufwärts des Lufteingangs (10) erzeugt; und
- eine zweite, als Druckbeaufschlagungsphase bezeichnete Phase, bei der der Hydroejektor (8) der Ansaug- und Druckbeaufschlagungsvorrichtung (1) eine Druckbeaufschlagung stromabwärts des Luftausgangs (17) erzeugt.

## Claims

1. A suction and pressurisation device comprising:
- a water tank (2);
- a high-pressure pump (3) connected to the water tank (2) and capable of supplying high-pressure water;
- a hydro-ejector (8) supplied with high-pressure water by the high-pressure pump (3) at a water inlet (9) and configured to generate, from the speed of the high-pressure water, a suction upstream of an air inlet (10), the high-pressure water and the air sucked in mixing to form a flow of water and air which is discharged at an exhaust pipe (13);
- a separation pot (14) connected to the exhaust pipe (13) of the hydro-ejector (8) and configured to separate water and air from the flow of water and air, the water being discharged at a water outlet (15) and returning to the water tank (2) on the one hand and the air being discharged at an air outlet (17) on the other hand,
**characterised in that** the separation pot (14) comprises, at the water outlet (15), a float (22) and a throttle (18) configured to allow the hydro-ejector (8) to generate a pressure in the separation pot (14) capable of pressurising downstream of the air outlet (17), the hydro-ejector (8) thus being capable of:
- a suction upstream of the air inlet (10); and
- a pressurisation downstream of the air outlet (17).

2. The device according to claim 1,
**characterised in that** it comprises a four-way reverse flow valve (21) configured to connect the hydro-ejector (8) and the separation pot (14) in one or other of the following configurations:
- a first configuration in which the air inlet (10) of the hydro-ejector (8) is connected to an air intake pipe (12) and the air outlet (17) of the separation pot (14) is connected to the open air; and
- a second configuration in which the air inlet (10) of the hydro-ejector (8) is connected to the open air and the air outlet (17) of the separation pot (14) is connected to a pressurisation pipe (20).

3. The device according to any of claims 1 and 2,
**characterised in that** the separation pot (14) comprises the float (22) in the region of the water outlet (15), the float (22) and the water outlet (15) comprising the throttle (18) being configured to enable to maintain a height of water in the separation pot (14) which remains above a minimum level and below a maximum level.

4. The device according to claim 3,
**characterised in that** said minimum level corresponds to a height of water from which air is carried along with the water at the water outlet (15).

5. The device according to any one of claims 3 and 4,
**characterised in that** said maximum level corresponds to a height of water from which water is carried away with the air at the air outlet (17).

6. The device according to any one of claims 1 to 5,
**characterised in that** the separation pot (14) has the shape of a hydrocyclone.

7. The device according to any one of claims 1 to 6,
**characterised in that** the separation pot (14) comprises at least one deflector configured to direct the flow entering the separation pot (14) towards a bottom (23) of said separation pot (14) comprising the water outlet (15) and the throttle (18).

8. A hydrocleaner,
**characterised in that** it comprises at least one suction and pressurisation device (1) according to any one of claims 1 to 7.

9. The hydrocleaner according to claim 8,
**characterised in that** it comprises at least one storage tank (31), and **in that**:
- the air inlet (10) of the hydro-ejector (8) is able to be connected to a suction orifice (32) of the storage tank (31), the hydro-ejector (8) being able to generate suction in the storage tank (31) from the suction generated upstream of the air inlet (10); and
- the air outlet (17) of the separation pot (14) is able to be connected to a pressurisation orifice (34) of the storage tank (31), the hydro-ejector (8) being able to generate pressurisation in the storage tank (31) from the pressurisation generated downstream of the air outlet (17) of the separation pot (14).

10. The hydrocleaner according to claim 9,
**characterised in that** the suction and pressurisation device (1) comprises a four-way flow reversal valve (21) configured to connect the hydro-ejector (8) and the separation pot (14) in one or other of the following configurations:
- a first configuration allowing the hydro-ejector (8) to generate suction in the storage tank (31), according to which the air inlet (10) of the hydro-ejector (8) is connected to said orifice of the storage tank (31) and the air outlet (17) of the separation pot (14) is connected to the open air; and
- a second configuration allowing the hydro-ejector (8) to generate pressure in the storage tank (31), according to which the air inlet (10) of the hydro-ejector (8) is connected to the open air and the air outlet (17) of the separation pot (14) is connected to said orifice of the storage tank (31).

11. A method for sucking and pressurizing using a suction and pressurisation device (1) according to any one of claims 1 to 7,
**characterised in that** it comprises the following two phases:
- a first so-called suction phase in which the hydro-ejector (8) of the suction and pressurisation device (1) generates suction upstream of the air inlet (10); and
- a second so-called pressurisation phase in which the hydro-ejector (8) of the suction and pressurisation device (1) generates a pressure build-up downstream of the air outlet (17).
